# EUROPEAN PATENT SPECIFICATION

(11) **EP 0 605 734 B1**
(45) Date of publication and mention of the grant of the patent: **24.10.2001**
(21) Application number: 93913595.0
(22) Date of filing: 28.06.1993
(51) Int. Cl.: H01M 10/52, H01M 10/40

(54) **BATTERY**
BATTERIE
PILE

(30) Priority: 30.06.1992 JP 19766192; 18.09.1992 JP 27515792; 15.03.1993 JP 8125593
(43) Date of publication of application: 13.07.1994
(73) Proprietor: YUASA CORPORATION, Takatsuki-shi, Osaka 569 (JP)
(72) Inventor: INAMASU, Tokuo Yuasa Corporation, Takatsuki-shi Osaka 569 (JP); TAKEDA, Kazunari Yuasa Corporation, Takatsuki-shi Osaka 569 (JP); IZUCHI, Syuichi Yuasa Corporation, Takatsuki-shi Osaka 569 (JP); YOSHIHISA, Youetsu Yuasa Corporation, Takatsuki-shi Osaka 569 (JP)
(74) Representative: Stoner, Gerard Patrick
(86) International application number: PCT/JP93/00880
(87) International publication number: WO 94/00889

(56) References cited:
- EP-A- 0 075 132
- WO-A-91/17581
- JP-A- 1 107 470
- JP-A- 1 109 665
- JP-A- 48 069 784
- JP-A- 60 127 669
- JP-A- 63 301 469
- JP-B- 53 034 295
- JP-B- 56 032 740
- US-A- 4 935 317
- PATENT ABSTRACTS OF JAPAN vol. 10 no. 129 (E-403) ,14 May 1986 & JP-A-60 258870 (MATSUSHITA DENKI SANGYO KK)
- PATENT ABSTRACTS OF JAPAN vol. 6 no. 147 (E-123) ,6 August 1982 & JP-A-57 069669 (MATSUSHITA ELECTRIC IND CO)
- PATENT ABSTRACTS OF JAPAN vol. 15 no. 187 (E-1067) ,14 May 1991 & JP-A-03 049167 (HITACHI LTD)
- PATENT ABSTRACTS OF JAPAN vol. 11 no. 224 (E-525) ,21 July 1987 & JP-A-62 043079 (SHARP CORP)

## Description

This invention relates to batteries of the kind which operate reversibly at environmental temperature, in which the electrodes and electrolyte are improved.

### Background

With a recent tendency to design various electric equipments into micro-electronic forms, there is increasing demand for batteries which are small in size, light in weight, thin, and high in energy density. In the primary battery field, a small-sized and light-weight battery such as a lithium battery has already been put to practical use. However, its application field has been limited. In the secondary battery field, a battery utilizing non-aqueous electrolyte, which can be made smaller in size and weight, attracts public attention at present as an alternative to conventional lead and nickel-cadmium batteries.

Here, in order to obtain a small-sized and light-weight battery having a high energy density and a high reliability, it is necessary to examine the following problems (1) and (2).
(1) Problem of electrode active material and electrode
(2) Problem of electrolyte

Electrode active materials utilizing intercalation and doping phenomena of layer compounds are now specially studied in many research organizations. These materials are expected to have excellent charge/discharge cycle characteristics, because a theoretically complicated chemical reaction does not take place at time of electrochemical reaction in charging and discharging. However, in such electrode active materials, expansion and contraction of the electrode active material accompany charging and discharging. To cope with this problem, it is required to improve the mechanical strengths of the electrode and electrolyte.

A liquid electrolyte, especially prepared by dissolving ionic compound in an organic electrolyte, has so far been generally used. However, since there have been troubles such as ease of leakage of electrolyte from the battery and ease of elution and evaporation of electrode material etc. when the liquid electrolyte has been used, problems of inferiority in long-term reliability and flying-around of electrolyte in a sealing process have remained unsolved. As a means to solve these problems, that is, a means to improve a solution-leakage resistance and a long-term reliability, an ion-conductive high-molecular compound having a high ionic conductivity has been reported and further studied.

Our EP 580865 which is relevant under Article SY(3) EPC describes such a secondary battery, having a sealed interior containing a cathode composite, an anode composite and an electrolyte, all three of which comprise an ion-conductive high-molecular compound containing polymerized acrylate and ethylene glycol residues. An ionic compound such as LiBF₄ is dissolved in the high-molecular compound by means of an organic compound such as 1,2-dimethoxyethane.

When the ion-conductive high-molecular compound is used as an electrolyte for electrochemical device, it becomes necessary to make the electrolyte into a film shape in order to reduce an internal resistance. Especially, this is important for a film type battery. In case of the ion-conductive high-molecular compound, it is possible to work its uniform film easily into a voluntary shape, and various methods for this purpose are known. Heating and polymerizing method has so far been used frequently because of its conveniency. However, the heating and polymerizing method has included the following problems.
(1) It is hard to increase manufacturing speed because the heating and polymerizing time is very long.
(2) It is hard to carry out uniform polymerization because a temperature gradient is apt to be produced in a heating furnace.
(3) The heating furnace and its auxiliary facility become large because the heating must be done in an atmosphere of inert gas.
(4) A cross-linked network structure tends to be more irregular because displacement of polymerization initiator occurs in the composition liquid of the ion-conductive high-molecular compound.

Also, the following serious problems were noted when using the ion-conductive high-molecular compound for the battery. As charge/discharge cycles were repeateds, water content was extracted from the cathode composite. This water reached the anode through the electrolyte layer, comprising the ion-conductive high-molecular compound. The water reacted with lithium metal of the anode to produce hydrogen gas, which raised the pressure inside the battery. As a result, problems such as expansion and bursting of batteries were encountered, affecting long-term reliability and safety.

JP-A-60/258870 describes including a hydrogen-absorbing metal alloy in a lithium secondary battery (although not one with a high-molecular electrolyte as mentioned above) to avoid expansion and bursting due to internal generation of hydrogen gas. The alloy absorbs hydrogen to form a metal hydride.

The present invention, taking into account the above, aims to provide a new kind of battery adaptation for preventing expansion or bursting, with consequent improvement in long-term reliability, safety, workability and charge/discharge cycle characteristics.

Accordingly the invention provides a battery having a sealed interior surrounded by a current collector and sealing material, said battery interior containing:
a cathode composite comprising an electrochemically positive active material and an electroconductive material;
an anode composite comprising electrochemically negative active material and an electro conductive material, or an anode consisting of electrochemically negative active material, and
an electrolyte,
wherein at least one of the anode or anode composite, cathode and electrolyte includes an ion-conductive high-molecular compound containing dissolved ionic compound;
and said battery interior contains one or more kinds of material by which gas produced in the battery is added to residual reactive double bonds in the ion-conductive high-molecular compound.

Gas produced in the battery is therefore caused to be added to residual reactive double bonds in the ion-conductive high-molecular compound, so that increase in battery internal pressure due to gas is restrained and the expansion and bursting of battery can be prevented. The ion-conductive high-molecular compound is formed by polymerization of a specified high-molecular compound. However, it is confirmed that reactive double bonds remain up to about 5% even when the compound is polymerized by irradiation with ionizing radiation or ultraviolet rays.

In case when the electrolyte layer is composed of the ion-conductive high-molecular compound, a formation of dendrite when using lithium for the anode is restrained and a liquid-leakage resistance i.e. a long-term reliability can be improved. Further, since mechanical strength of the electrolyte layer is better, short-circuiting at manufacture of battery and during the charge/discharge cycle can be prevented.

The above-mentioned materials may be present anywhere in the battery interior. For example, (1) interior or surface of the cathode composite; (2) interior or surface of the anode composite; (3) surface of the anode; (4) surface of the sealing material, and (5) interior of the electrolyte layer may be mentioned.

For the foregoing materials, elements belonging to Group VIII in the periodic table, e.g. palladium, ruthenium, rhodium or platinum, may be used. Further, palladium-treated carbon, palladium-treated MnO₂, platinum black and platinum-treated carbon. A binder may be included in at least one of the cathode composite and the anode composite. By including these materials, the mechanical strength of the electrode can be improved. The expansion and contraction of electrode accompanying repeated charging/discharging can be eliminated so that the charge/discharge cycle characteristic can be improved from this point too.

A binder is prepared by dissolving or dispersing an organic compound, which will be described later, in a solvent such as dimethylformamide or xylene. As the organic compound, polymers or copolymers of the following compounds may be mentioned: acrylonitrile, methacrylonitrile, vinylidene fluoride, vinyl fluoride, chloroprene, vinylpyridine and their derivatives, vinylidene chloride, ethylene, propylene, straight-chain dienes and cyclic dienes, e.g. cyclopentadiene, 1,3-cyclohexadiene.

As methods for including the binder into the electrode; a method in which the foregoing organic compound is dissolved in solvent, the active material and the ion-conductive high-molecular compound etc. are dispersed in it, and the prepared solution is used as a coating liquid; and a method in which the active material and the ion-conductive high-molecular compound etc. are dispersed in a dispersant comprising the foregoing organic compound and a dispersant for dispersing the compound, and the prepared solution is used as a coating liquid etc., are generally used.

It is desirable to form the ion-conductive high-molecular compound by polymerization reaction produced by irradiation of ionizing radiation or ultraviolet ray. According to this method, a workability is improved as compared with the case of the heating and polymerization method.

As the ionizing radiation; γ-ray, X-ray, electron beam and neutron beam etc. may be mentioned. The method using these ionizing radiations works very efficiently when the above-mentioned ion-conductive high-molecular compound is cross- linked. Namely, a degree of cross-linking of the ion-conductive high-molecular compound can be controlled easily by controlling an amount of irradiation and various electrodes and electrolytes, which are optimum from electrochemical standpoint, can be made up. In addition, the ionizing radiation is excellent in an energy efficiency, too.

As the foregoing ion-conductive high-molecular compound; a compound may be mentioned which is prepared by polymerizing a high-molecular compound having reactive double bond and polyether bond so as to have a crosslink network structure. For example, a compound prepared by polymerizing monoacrylate or monomethacrylate of polyethylene glycol with diacrylate or dimethacrylate of polyethylene glycol may be mentioned. Since such the ion-conductive high-molecular compound is a crosslink polymer formed by ether bond, it does not include intermolecular hydrogen bond so that its structure has a low glass transition temperature. For this reason, migration of dissolved ionic compound becomes extremely easy in such the ion-conductive high-molecular compound.

As the ionic compound; inorganic ionic salts including one kind of Li, Na or K such as LiClO₄, LiBF₄, LiAsF₆, LiPF₆, LiI, LiBr, Li₂B₁₀Cl₁₀, LiCF₃SO₃, LiCF₃CO₂, LiSCN, NaI, NaSCN, NaBr, NaClO₄, KClO₄ and KSCN etc.; quaternary ammonium salts such as (CH₃)₄NBF₄, (CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate and (C₂H₅)₄N-phthalate etc.; and organic ionic salts such as lithium stearylsulfonate, sodium octylsulfonate, and lithium dodecylbenzenesulfonate etc.; for example, may be mentioned. These ionic compounds may be used by being combined two or more kinds.

Concerning a compounding ratio of these ionic compounds, a ratio of the ionic compound to ether bond oxygen of the foregoing high-molecular compound is 0.0001 to 5.0 moles, especially a ratio of 0.005 to 2.0 moles is desirable. When a quantity of ionic compound is excessively large, the excessive ionic compound i.e. inorganic ionic salt for example, does not dissociate but is only present as a mixture, so that an ion conductivity is decreased conversely as a result. Further, a proper compounding ratio of the ionic compound differs depending on a kind of the electrode active material. For example, a ratio around a value offering the maximum ion conductivity of electrolyte is desirable for a battery utilizing the intercalation of layer compound, and a ratio must be set so as to cope with a change of ion concentration in the electrolyte caused by charging and discharging for a battery using electro-conductive polymer utilizing the doping phenomenon as the electrode active material.

There is no special limitation in an inclusion method of the ionic compound. A method may be mentioned, for example, in which the ionic compound is dissolved in an organic solvent such as methyl ethyl ketone or tetrahydrofran etc. and mixed uniformly to the foregoing high-molecular compound, and the organic solvent is then removed under vacuum reduced pressure.

An organic compound which can dissolve the ionic compound may be included in the ion-conductive high-molecular compound. By doing so, the ion-conductive high-molecular compound can be improved markedly in its ionic conductivity without changing its basic skeleton.

As the organic compound which can dissolve the ionic compound; cyclic carbonic esters such as propylene carbonate and ethylene carbonate etc.; cyclic esters such as γ-butyrolactone; ethers such as tetrahydrofuran or its derivative, 1,3-dioxane, 1,2-dimethoxyethane and methyldigraim etc.; nitriles such as acetonitrile and benzonitrile etc.; dioxorane or its derivative; and sulfolane or its derivative etc.; for example, may be mentioned. These compounds may be used independently or by being combined two or more kinds. The kind of compound is not limited to them. Compounding ratio and compounding method are at will.

Carbon material may be used as the negative active material. The carbon material has a high doping capacity, a low self-discharge rate, an excellent cycle characteristic, and a base-potential extremely near to that of metallic lithium. A theoretically complicated chemical reaction does not take place at time of the electrochemical reaction during charging and discharging. Consequently, an extremely excellent charge/discharge cycle characteristic can be obtained when the carbon material is used as the negative active material. In addition, the anode becomes extremely stable from physical and electrochemical standpoints.

As the negative active material; alloys including lithium metal such as lithium-aluminum, lithium-lead, lithium-tin, lithium-aluminum-tin, lithium-gallium and Wood's alloys etc., lithium metals and carbon materials etc., may be mentioned. These materials may be used by being combined two or more kinds.

As the carbon material; it is desirable to use materials having analyzed results by diffraction of X-ray as listed in Table 1, carbon powder prepared by burning anisotropic pitch at a temperature of higher than 2,000°C (average grain size: under 15 *µ*m inclusive), and carbon fiber etc., for example.

**Table 1**

| | |
|---|---|
| Lattice spacing (d002) | 3.35∼3.40Å |
| Size of crystalline in a-axis direction | La: 200Å or more |
| Size of crystalline in c-axis direction | Lc: 200Å or more |
| True density | 2.00∼2.25g/cm³ |

As the positive active material, the following materials may be mentioned. There are I-group metallic compounds such as CuO, Cu₂O, Ag₂O, CuS and CuSO₄ etc.; IV-group metallic compounds such as TiS₂, SiO₂ and SnO etc., V-group metallic compounds such as V₂O₅, V₆O₁₂, VOₓ, Nb₂O₅, Bi₂O₃ and Sb₂O₃ etc.; VI-group metallic compounds such as CrO₃, Cr₂O₃, MoS₂, WO₃ and SeO₂ etc.; VII-group metallic compounds such as MnO₂ and Mn₂O₃ etc.; VIII-group metallic compounds such as Fe₂O₃, FeO, Fe₃O₄, Ni₂O₃, NiO, CoS₂ and CoO etc.; metallic compounds such as lithium-cobalt composite oxide and lithium-manganese composite oxide etc., for example, expressed by general formulas of LiₓMX₂ and LiₓMN_{y}X₂ (M and N are I- through VIII-group metals and X is chalcogens compound such as oxygen and sulfur etc.); electro-conductive high-molecular compounds such as polypyrrole, polyaniline, polyparaphenylene, polyacetylene and polyacene group materials; and pseudo-graphite structural carbon material etc. However, the kind of positive active material is not limited to them.

Concerning an installation method of the ion-conductive high-molecular compound on a surface of the electrode; it is desirable to coat the compound into an uniform thickness by means of, for example, a roller coating using an applicator roll, a doctor blade method, a spin coating and bar coder etc. However, the kind of coating method is not limited to them. By using these means, it become possible to coat the ion-conductive high-molecular compound on the surface of the electrode in a voluntary thickness and a voluntary shape.

Concerning an installation method of the electrode on the current collector; it is preferable to coat the compound into an uniform thickness by means of, for example, a roller coating using an applicator roll, a doctor blade method, a spin coating and bar coder etc. However, the kind of installation method is not limited to them. By using these means, it becomes possible to increase practical surface areas of the active material in contact with the electrolytes and current collector in the electrode, and it become possible to install the electrode on the current collectors in a voluntary thickness and a voluntary shape. In these cases, carbon such as graphite, carbon black and acetylene black etc. (This carbon has properties quite different from those of the carbon used for the negative active material.) and electro-conductive material such as metallic powder and electro-conductive metal oxide etc. are mixed in the electrode as occasion demands, so that an electron conductivity may be improved. Further, in order to obtain an uniform mixed and dispersed system when manufacturing the electrodes, several kinds of dispersants and dispersion mediums may be added. In addition, a thickener, an extender and a tackifier may be added.

It is preferable to use aluminum, stainless steel, titan and copper etc. for the positive current collector plate and to use stainless steel, iron, nickel and copper etc. for the negative current collector plate. However, the kind of material is not limited to them.

### Brief Description of the Drawings

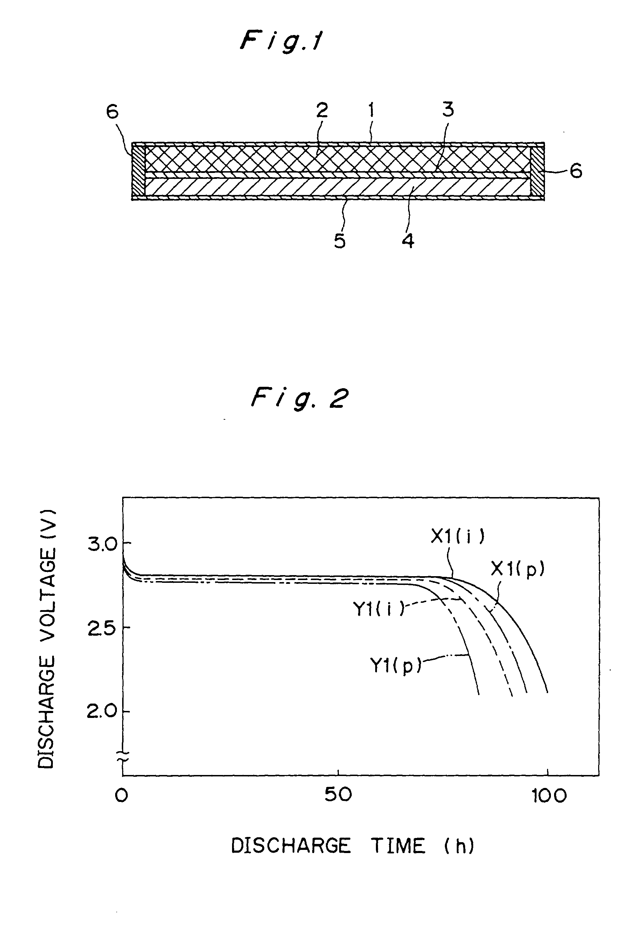

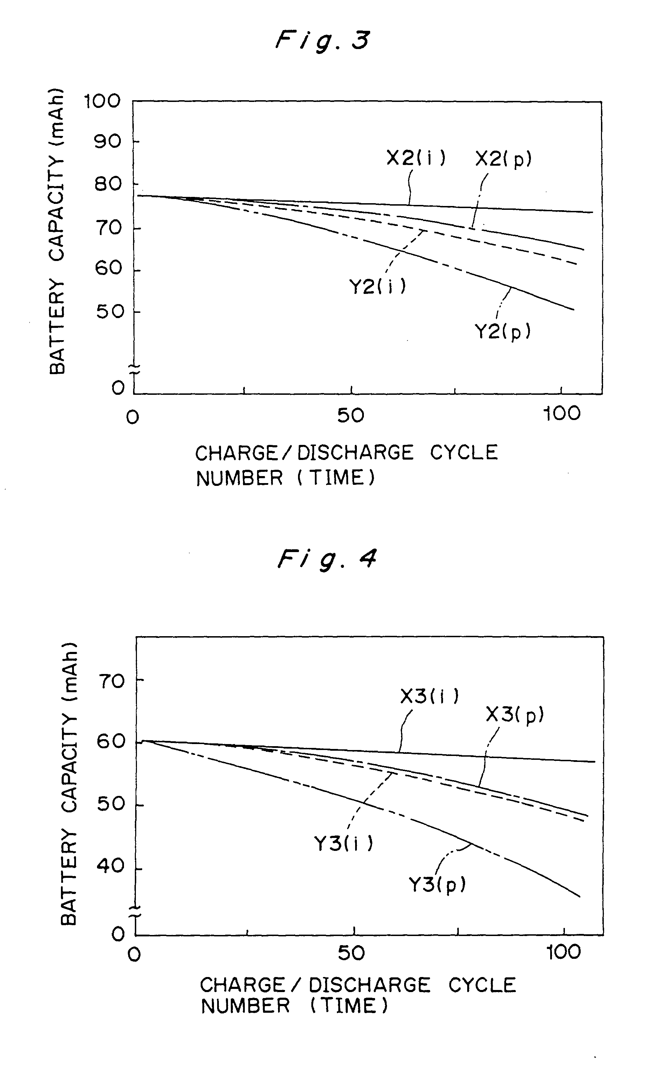

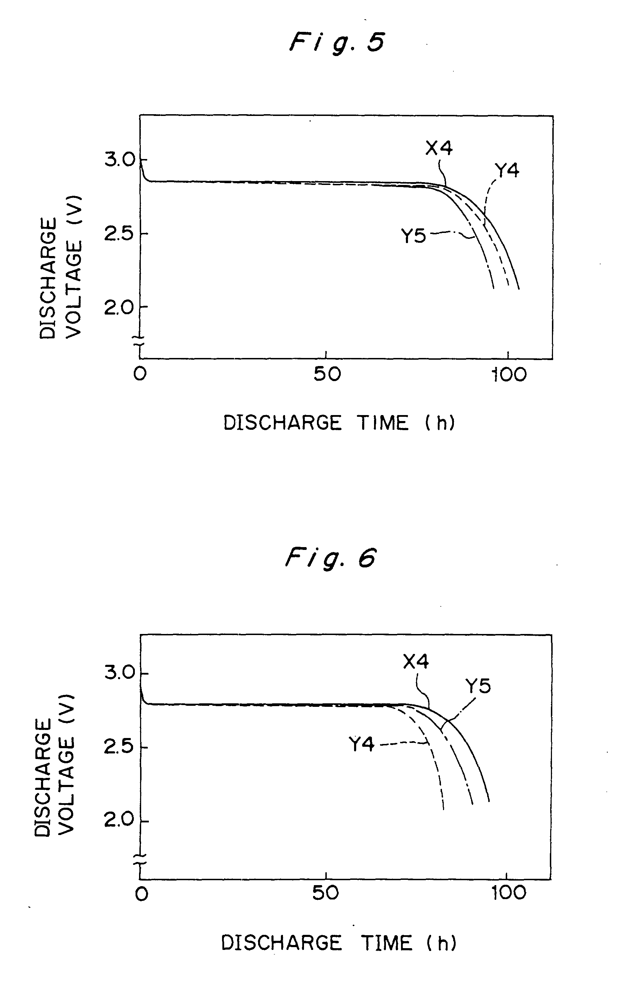

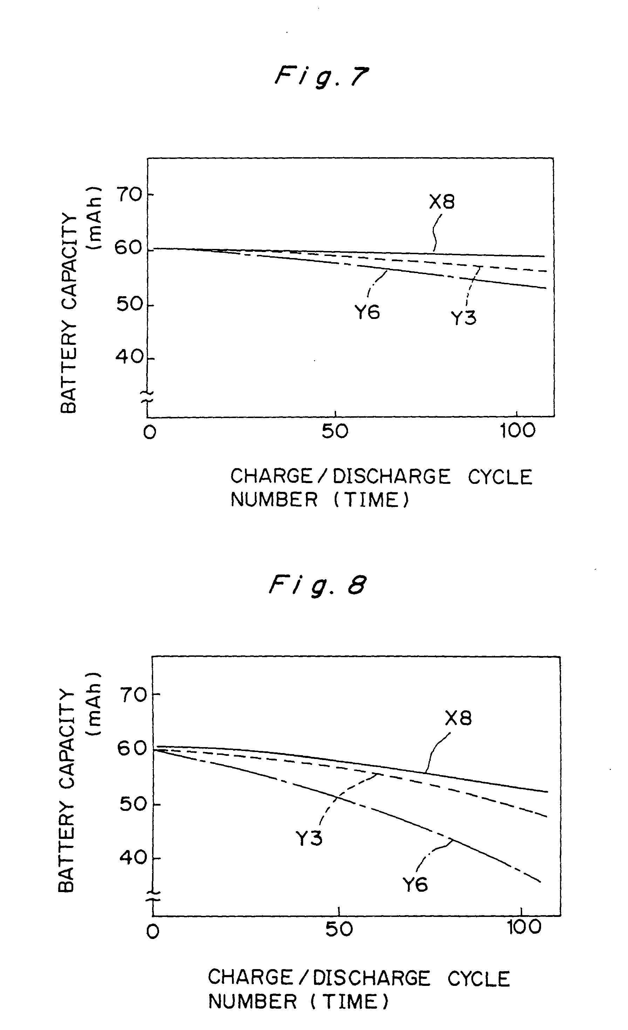

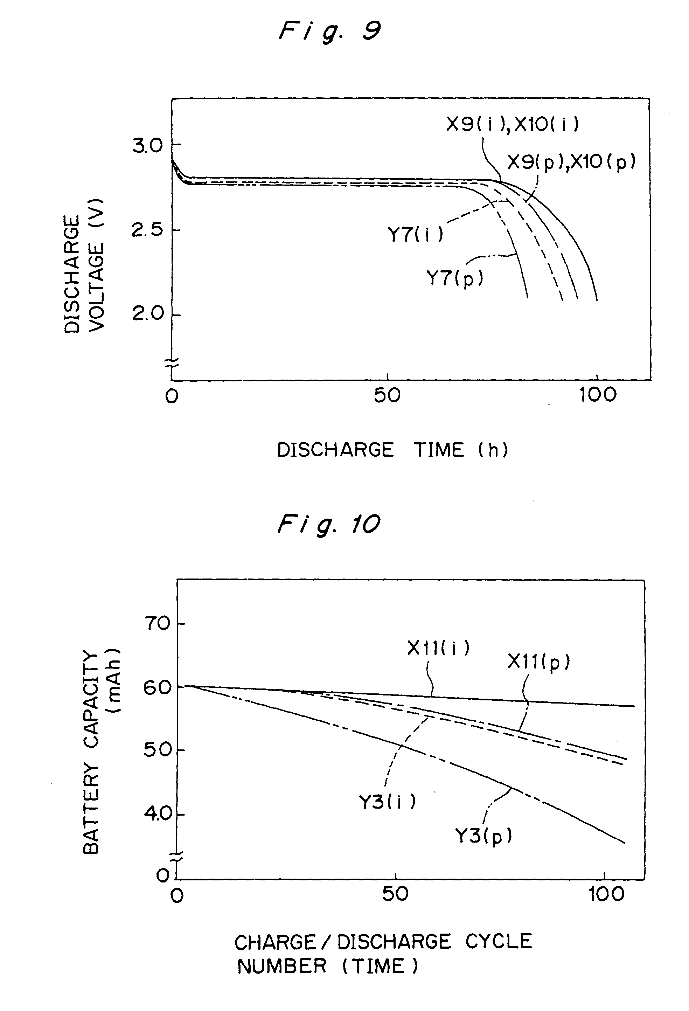

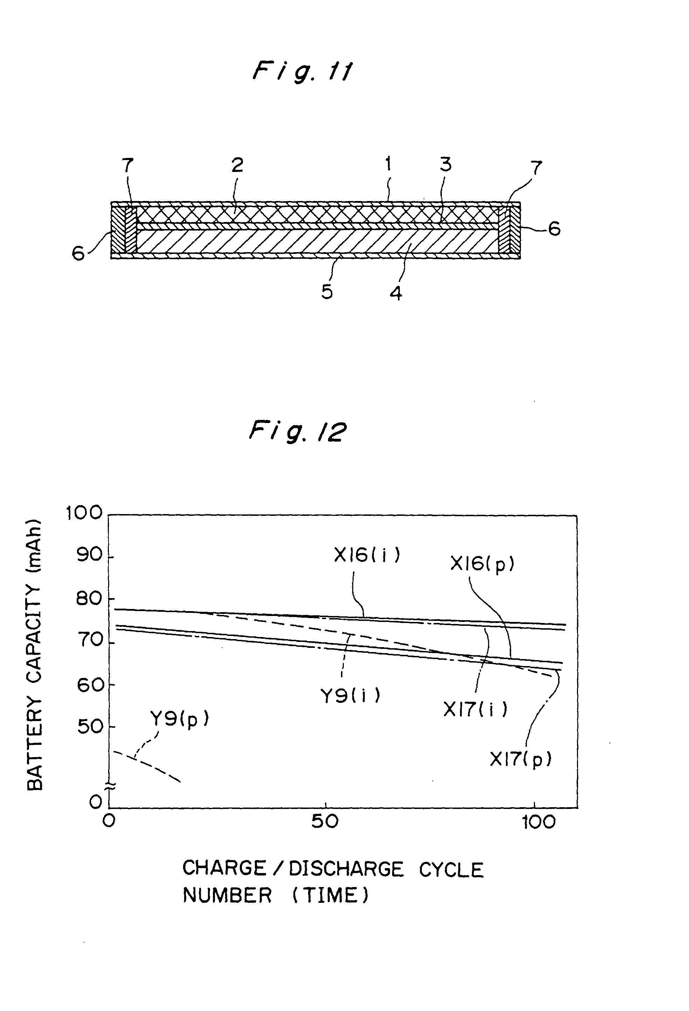

Fig. 1 is a vertical sectional view showing a fundamental structure of battery of this invention. Fig. 2 is a diagram showing discharge characteristics at initial stage and after long-term preservation for respective batteries embodiment 1 and comparison example 1. Fig. 3 is a diagram showing charge/discharge cycle characteristics at initial stage and after long-term preservation for respective batteries of embodiment 2 and comparison example 2. Fig. 4 is a diagram showing charge/discharge cycle characteristics at initial stage and after long-term preservation for respective batteries embodiment 3 and comparison example 3. Fig. 5 is a diagram showing discharge characteristics at initial stage for respective batteries embodiment 4 and comparison examples 4 and 5. Fig. 6 is a diagram showing discharge characteristics after long-term preservation for respective batteries embodiment 4 and comparison examples 4 and 5. Fig.7 is a diagram showing discharge characteristics at initial stage for respective batteries embodiment 8 and comparison examples 3 and 6. Fig. 8 is a diagram showing discharge characteristics after long-term preservation for respective batteries embodiment 8 and comparison examples 3 and 6. Fig. 9 is a diagram showing discharge characteristics at initial stage and after long-term preservation for respective batteries embodiments 9 and 10 and comparison example 7. Fig. 10 is a diagram showing charge/discharge cycle characteristics at initial stage and after long-term preservation for respective batteries embodiment 11 and comparison example 3. Fig. 11 is a vertical sectional view showing a fundamental structure of battery of embodiment 14. Fig. 12 is a diagram showing charge/discharge cycle characteristics at initial stage and after long-term preservation for respective batteries embodiments 16 and 17 and comparison example 9.

### Best Mode for Carrying Out the Invention

### (Embodiment 1)

Fig. 1 is a vertical sectional view showing a film type primary battery which is an example of battery of this invention. In this figure, 1 is a positive current collector plate comprising stainless steel, 2 is a cathode composite, 3 is an electrolyte layer, 4 is an anode, 5 is a negative current collector plate comprising stainless steel and 6 is a sealing material comprising denatured polypropylene. The both current collector plates 1 and 5 serve also as outer packages.

In the battery of this invention, palladium forming an element belonging to VIII-group in periodic table exists in the cathode composite 2.

The battery of this embodiment was made up through the following processes (a) to (d).
(a); The cathode composite 2 was formed in the following manner. MnO₂ forming the positive active material was mixed to acetylene black forming the conductive material with a weight ratio of 85 to 15 (mixture A₁). Polyethylene glycol diacrylate (molecular weight: 5000) was mixed to polyethylene glycol monoacrylate (molecular weight: 400) with a weight ratio of 6 to 4 to form a high-molecular mixture (mixture B₁). 10 weight parts of the mixture B₁ were mixed with 1 weight part of LiClO₄, 20 weight parts of propylene carbonate and 0.2 weight part of palladium treated carbon (palladium content of 1.0%) (mixture C₁). Carbon having a brand name of "Palladium on 4- to 8-mesh carbon" made by Aldrich Corp. was used for the foregoing palladium treated carbon, which meant carbon of 4 to 8 meshes coated with palladium. The mixture A₁ was mixed to the mixture C₁ with a weight ratio of 10 to 3 under an atmosphere of dried inert gas (mixture D₁). The mixture D₁ was cast by means of screen coating on the positive current collector plate 1, on a surface of which a conductive carbon film is formed, and irradiated with electron beam having an electron beam intensity of 10 Mrad under an atmosphere of dried inert gas so as to be cured. A film thickness of the cathode composite 2 formed on the positive current collector plate 1 was 60 *µ*m.
(b); The anode 4 was composed of lithium metal forming the negative active material, and formed by being press bonded to the negative current collector plate 5.
(c); The electrolyte layer 3 was formed on the anode 4 in the following manner. The mixture B₁ same with that of the process (a) was prepared. 30 weight parts of the mixture B₁ were mixed with 6 weight parts of LiClO₄ and 64 weight parts of propylene carbonate (mixture E₁). This mixture E₁ was cast by means of screen coating on the anode 4 and irradiated with electron beam having an electron beam intensity of 8 Mrad under the atmosphere of dried inert gas so as to be cured. A thickness of the electrolyte layer 3 formed on the anode 4 was 20 *µ*m.
(d); A laminate of the cathode composite 2 and the positive current collector plate 1 prepared by the process (a) and a laminate of the electrolyte layer 3, the anode 4 and the negative current collector plate 5 prepared by the process (c) were made contact each other at the cathode composite 2 and the electrolyte layer 3.

In the processes (a) and (c), the mixture B₁ is polymerized by means of the irradiation of electron beam to form the ion-conductive high-molecular compound having a crosslink network structure. LiClO₄ forming the ionic compound is included in the prepared ion-conductive high-molecular compound under a state of being preferably dissolved by propylene carbonate.

### (Comparison example 1)

A battery of this comparison example is different from that of the embodiment 1 only in a point that the cathode composite 2 does not include the palladium treated carbon.

### (Test 1)

Discharge tests were done on the batteries of embodiment 1 and comparison example 1 to examine respective discharge characteristics at initial stage and after long-term preservation. An electrode surface area could be changed variously depending on manufacturing process, however, it was set to 100 cm² in these tests.

Conditions of discharge tests were a temperature of 25°C, and a current per unit area of 0.1 mA/cm².

A period of long-term preservation was 100 days at 60 °C.

Fig. 2 shows discharge characteristics at initial stage and after long-term preservation. In the figure, X1(i) denotes a discharge characteristic at initial stage of the battery of embodiment 1, X1(p) denotes a discharge characteristic after long-term preservation of the battery of embodiment 1, Y1(i) denotes a discharge characteristic at initial stage of the battery of comparison example 1, and Y1(p) denotes a discharge characteristic after long-term preservation of the battery of comparison example 1. Further, an axis of abscissa represents a discharge time (hour) and an axis of ordinate represents a discharge voltage (V).

As obvious from Fig. 2, the battery of embodiment 1 is excellent in the discharge characteristics both at initial stage and after long-term preservation as compared with the battery of comparison example 1. This may be attributable to a fact that, since hydrogen gas produced in the battery is absorbed by the palladium included in the cathode composite 2 or added to the residual reactive double bond in the ion-conductive high-molecular compound included in the cathode composite 2 and the electrolyte layer 3, the rise of battery inside pressure is restrained and the expansion of battery is controlled so that contact of the electrolyte layer 3 with the cathode composite 2 and the anode 4 can be maintained in a desirable state.

Further, respective 25 cells of the batteries of embodiment 1 and comparison example 1 were examined to check numbers of expanded cells after long-term preservation. The number was zero for the battery of embodiment 1, but it was seven for the battery of comparison example 1. In other words, no expansion was recognized in case of the battery of embodiment 1.

### (Embodiment 2)

This embodiment relates to a film type secondary battery. In the battery of this embodiment, V₂O₅ is used for the active material of the cathode composite 2, and palladium forming an element belonging to VIII-group in periodic table exists in the cathode composite 2. A battery structure is same with that of the battery shown in Fig. 1.

The battery of this embodiment was made up through the following processes (a) to (d).
(a); The cathode composite 2 was formed in the following manner. V₂O₅ forming the positive active material was mixed to acetylene black forming the conductive material with a weight ratio of 85 to 15 (mixture A₂). While, the mixture B₁ same with that of the embodiment 1 was prepared. 10 weight parts of the mixture B₁ were mixed with 1 weight part of LiAsF₆, 10 weight parts of ethylene carbonate, 10 weight parts of 2-methyltetrahydrofuran and 0.2 weight part of palladium treated carbon same with that of the embodiment 1 (mixture C₂). The mixture A₂ was mixed to the mixture C₂ with a weight ratio of 10 to 3 under an atmosphere of dried inert gas (mixture D₂). The mixture D₂ was cast by means of screen coating on the positive current collector plate 1, on a surface of which a conductive carbon film is formed, and irradiated with electron beam having an electron beam intensity of 10 Mrad under an atmosphere of dried inert gas so as to be cured. A film thickness of the cathode composite 2 formed on the positive current collector plate 1 was 60 *µ*m.
(b); The anode 4 was composed of lithium metal forming the negative active material, and formed by being press bonded to the negative current collector plate 5.
(c); The electrolyte layer 3 was formed on the anode 4 in the following manner. The mixture B₁ same with that of the embodiment 1 was prepared. 30 weight parts of the mixture B₁ were mixed with 6 weight parts of LiAsF₆, 32 weight parts of ethylene carbonate and 32 weight parts of 2-methyltetrahydrofuran (mixture E₂). This mixture E₂ was cast by means of screen coating on the anode 4, and irradiated with electron beam having an electron beam intensity of 8 Mrad under the atmosphere of dried inert gas so as to be cured. A thickness of the electrolyte layer 3 formed on the anode 4 was 20 *µ*m.
(d); A laminate of the cathode composite 2 and the positive current collector plate 1 prepared by the process (a) and a laminate of the electrolyte layer 3, the anode 4 and the negative current collector plate 5 prepared by the process (c) were made contact each other at the cathode composite 2 and the electrolyte layer 3.

### (Comparison example 2)

A battery of this comparison example is different from that of the embodiment 2 only in a point that the cathode composite 2 does not include the palladium treated carbon.

### (Test 2)

Charge/discharge cycle tests were done on the batteries of embodiment 2 and comparison example 2 to examine respective charge/discharge cycle characteristics at initial stage and after long-term preservation. An electrode surface area could be changed variously depending on manufacturing process, however, it was set to 100 cm² in these tests.

Conditions of charge/discharge cycle tests were a temperature of 25°C, a constant current per unit area of 50 *µ*A/cm², a charge end voltage of 3.2V and a discharge end voltage of 2.0V.

A period of long-term preservation was 100 days at 60 °C.

Fig. 3 shows charge/discharge cycle characteristics at initial stage and after long-term preservation. In the figure, X2(i) denotes a charge/discharge cycle characteristic at initial stage of the battery of embodiment 2, X2(p) denotes a charge/discharge cycle characteristic after long-term preservation of the battery of embodiment 2, Y2(i) denotes a charge/discharge cycle characteristic at initial stage of the battery of comparison example 2 and Y2(p) denotes a charge/discharge cycle characteristic after long-term preservation of the battery of comparison example 2. Further, an axis of abscissa represents a charge/discharge cycle number (time) and an axis of ordinate represents a battery capacity (mAh).

As obvious from Fig. 3, the battery of embodiment 2 is excellent in the charge/discharge cycle characteristics both at initial stage and after long-term preservation as compared with the battery of comparison example 2. The reason can be considered as same with that of the embodiment 1.

Further, respective 25 cells of the batteries of embodiment 2 and comparison example 2 were examined to check numbers of expanded cells after long-term preservation. The number was zero for the battery of embodiment 2, but it was five for the battery of comparison example 2. In other words, no expansion was recognized in case of the battery of embodiment 2.

### (Embodiment 3)

This embodiment relates to a film type secondary battery. In the battery of this embodiment, LiCoO₂ is used for the active material of the cathode composite 2. A anode composite is used in place of the anode of the battery shown in Fig. 1, and other structure is same with that of the battery shown in Fig. 1. Palladium forming an element belonging to VIII-group in periodic table exists in the cathode composite 2 and the anode composite 4. An aluminum plate is used for the positive current collector plate 1.

The battery of this embodiment was made up through the following processes (a) to (e).
(a); The cathode composite 2 was formed in the following manner. LiCoO₂ forming the positive active material was mixed to acetylene black forming the conductive material with a weight ratio of 85 to 15 (mixture A₃). While, the mixture B₁ same with that: of the embodiment 1 was prepared. 10 weight parts of the mixture B₁ were mixed with 1 weight part of LiBF₄, 10 weight parts of 1,2-dimethoxyethane, 10 weight parts of γ-butyrolactone and 0.2 weight part of palladium treated carbon same with that of the embodiment 1 (mixture C₃). The mixture A₃ was mixed to the mixture C₃ with a weight ratio of 10 to 3 under an atmosphere of dried inert gas (mixture D₃). The mixture D₃ was cast by means of screen coating on the positive current collector plate 1, on a surface of which a conductive carbon film is formed, and irradiated with electron beam having an electron beam intensity of 12 Mrad under an atmosphere of dried inert gas so as to be cured. A film thickness of the cathode composite 2 formed on the positive current collector plate 1 was 60 *µ*m.
(b); The electrolyte layer 3 was formed on the cathode composite 2 in the following manner. The mixture B₁ same with that of the embodiment 1 was prepared. 30 weight parts of the mixture B₁ were mixed with 6 weight parts of LiBF₄, 32 weight parts of 1,2-dimethoxyethane and 32 weight parts of γ-butyrolactone (mixture F₃). The mixture F₃ was cast by means of screen coating on the cathode composite 2 and irradiated with electron beam having an electron beam intensity of 8 Mrad under an atmosphere of dried inert gas so as to be cured. A film thickness of the electrolyte layer 3 formed on the cathode composite 2 was 25 *µ*m.
(c); The anode composite 4 was formed in the following manner. The mixture C₃ same with that of the process (a) was prepared. Carbon powder forming the negative active material was mixed to the mixture C₃ with a weight ratio of 8 to 2 under an atmosphere of dried inert gas (mixture G₃). The mixture G₃ was cast by means of screen coating on the negative current collector plate 5 and irradiated with electron beam having an electron beam intensity of 15 Mrad under an atmosphere of dried inert gas so as to be cured. A film thickness of the anode composite 4 formed on the negative current collector plate 5 was 30 *µ*m.
(d); The electrolyte layer 3 was formed on the anode composite 4 in the following manner. The mixture F₃ same with that of the process (b) was prepared. The mixture F₃ was cast by means of screen coating on the anode composite 4 and irradiated with electron beam having an electron beam intensity of 8 Mrad under an atmosphere of dried inert gas so as to be cured. A thickness of the electrolyte layer 3 formed on the anode composite 4 was 25 *µ*m.
(e); A laminate of electrolyte layer 3, the cathode composite 2 and the positive current collector plate 1 prepared by the process (b) and a laminate of the electrolyte layer 3, the anode composite 4 and the negative current collector plate 5 prepared by the process (d) were made contact each other at the respective electrolyte layers 3.

### (Comparison example 3)

A battery of this comparison example is different from that of the embodiment 3 only in a point that the cathode composite 2 and the anode composite 4 do not include the palladium treated carbon.

### (Test 3)

Charge/discharge cycle tests were done on the batteries of embodiment 3 and comparison example 3 to examine respective charge/discharge cycle characteristics at initial stage and after long-term preservation. An electrode surface area could be changed variously depending on manufacturing process, however, it was set to 100 cm² in these tests.

Conditions of charge/discharge cycle tests were a temperature of 25°C, a constant current per unit area of 50 *µ*A/cm², a charge end voltage of 4.1V and a discharge end voltage of 2.7V.

A period of long-term preservation was 100 days at 60°C.

Fig. 4 shows charge/discharge cycle characteristics at initial stage and after long-term preservation. In the figure, X3(i) denotes a charge/discharge cycle characteristic at initial stage of the battery of embodiment 3, X3(p) denotes a charge/discharge cycle characteristic after long-term preservation of the battery of embodiment 3, Y3(i) denotes a charge/discharge cycle characteristic at initial stage of the battery of comparison example 3 and Y3(p) denotes a charge/discharge cycle characteristic after long-term preservation of the battery of comparison example 3. Further, an axis of abscissa represents a charge/discharge cycle number (time) and an axis of ordinate represents a battery capacity (mAh).

As obvious from Fig. 4, the battery of embodiment 3 is excellent in the charge/discharge cycle characteristics both at initial stage and after long-term preservation as compared with the battery of comparison example 3. The reason can be considered as same with that of the embodiment 1.

Further, respective 40 cells of the batteries of embodiment 3 and comparison example 3 were examined to check numbers of expanded cells after long-term preservation. The number was zero for the battery of embodiment 3, but it was 17 for the battery of comparison example 3. In other words, no expansion was recognized in case of the battery of embodiment 3.

### (Embodiment 4)

This embodiment relates to a film type primary battery and a battery structure is same with the battery shown in Fig. 1. Palladium forming an element belonging to VIII-group in periodic table and a binder exist in the cathode composite 2.

The battery of this embodiment was made up through the following processes (a) to (e).
(a); The cathode composite 2 was formed in the following manner. The mixture A₁ same with that of the embodiment 1 was prepared. The mixture A₁ was mixed to xylene solution (2 weight parts solution) of nitrile-butadiene rubber forming the binder and the palladium treated carbon same with that of the embodiment 1 with a weight ratio of 2.2 to 2.0 to 0.04 under an atmosphere of dried inert gas. This mixture was cast on the positive current collector plate 1, on a surface of which a conductive carbon film was formed, by means of screen coating and dried under the atmosphere of dried inert gas so as to be cured. A film thickness of the cathode composite 2 formed on the positive current collector plate 1 was 60 *µ*m.
(b); The electrolyte layer 3 was formed on the cathode composite 2 in the following manner. The mixture E₁ same with that of the embodiment 1 was prepared. This mixture E₁ was cast by means of screen coating on the cathode composite 2, and irradiated with electron beam having an electron beam intensity of 8 Mrad under the atmosphere of dried inert gas so as to be cured. A film thickness of the electrolyte layer 3 formed on the cathode composite 2 was 15 *µ*m.
(c); The anode 4 was composed of lithium metal forming the negative active material, and formed by being press bonded to the negative current collector plate 5.
(d); The electrolyte layer 3 was formed on the anode 4 in the following manner. The mixture E₁ same with that of the embodiment 1 was prepared. This mixture E₁ was cast by means of screen coating on the anode 4, and irradiated with electron beam having an electron beam intensity of 8 Mrad under the atmosphere of dried inert gas so as to be cured. A film thickness of the electrolyte layer 3 formed on the anode 4 was 15 *µ*m.
(e); A laminate of the electrolyte layer 3, the cathode composite 2 and the positive current collector plate 1 prepared by the process (b) and a laminate of the electrolyte layer 3, the anode 4 and the negative current collector plate 5 prepared by the process (d) were made contact each other at the respective electrolyte layers 3.

### (Comparison example 4)

A battery of this comparison example is different from that of the comparison example 1 only in a point that the thickness of the electrolyte layer 3 is 30 *µ*m. Namely, the cathode composite 2 does not include the palladium treated carbon and the binder.

### (Comparison example 5)

A battery of this comparison example is different from that of the embodiment 4 only in a point that the cathode composite 2 includes the binder but does not include the palladium treated carbon and that the electrolyte layer 3 is formed by irradiation of ultraviolet ray.

The battery of this comparison example was made up through the following processes (a) to (e).
(a); The cathode composite 2 was formed in the following manner. The same process (a) of the embodiment 4 was applied except that the palladium treated carbon was omitted. A film thickness of the cathode composite 2 formed on the positive current collector plate 1 was 60 *µ*m.
(b); The electrolyte layer 3 was formed on the cathode composite 2 in the following manner. The mixture B₁ same with that of the embodiment 1 was prepared. 30 weight parts of mixture B₁ was mixed to 6 weight parts of LiClO₄, 64 weight parts of propylene carbonate and 0.03 weight part of benzylmethylketal (mixture I₅). This mixture I₅ was cast by means of screen coating on the cathode composite 2, and irradiated with ultraviolet ray having an intensity of 20 mW/cm² for 60 seconds under the atmosphere of dried inert gas so as to be cured. A film thickness of the electrolyte layer 3 formed on the cathode composite 2 was 15 *µ*m.
(c); The anode 4 was composed of lithium metal forming the negative active material, and formed by being press bonded to the negative current collector plate 5.
(d); The electrolyte layer 3 was formed on the anode 4 in the following manner. The mixture I₅ same with that of the process (b) was prepared. This mixture I₅ was cast by means of screen coating on the anode 4, and irradiated with ultraviolet ray having an intensity of 20 mW/cm² for 60 seconds under the atmosphere of dried inert gas so as to be cured. A film thickness of the electrolyte layer 3 formed on the anode 4 was 15 *µ*m.
(e); A laminate of the electrolyte layer 3, the cathode composite 2 and the positive current collector plate 1 prepared by the process (b) and a laminate of the electrolyte layer 3, the anode 4 and the negative current collector plate 5 prepared by the process (d) were made contact each other at the respective electrolyte layers 3.

### (Test 4)

Discharge tests were done on the batteries of embodiment 4 and comparison examples 4 and 5 using same test conditions with those of the test 1, to examine respective discharge characteristics at initial stage and after long-term preservation. Fig. 5 shows discharge characteristics at initial stage and Fig. 6 shows discharge characteristics after long-term preservation. In these figures, X4 denotes a discharge characteristic of the battery of embodiment 4, and Y4 and Y5 denotes discharge characteristics of the batteries of comparison examples 4 and 5 respectively. Further, an axis of abscissa represents a discharge time (hour) and an axis of ordinate represents a discharge voltage (V).

As obvious from Fig. 5 and Fig. 6, the battery of embodiment 4 is excellent in the discharge characteristics both at initial stage and after long-term preservation as compared with the batteries of comparison examples 4 and 5. The reason can be considered as same with that of the embodiment 1.

Further, respective 40 cells of the batteries of embodiment 4 and comparison examples 4 and 5 were examined to check numbers of expanded cells after long-term preservation. The number was zero for the battery of embodiment 4, but it was nine for the battery of comparison example 4 and 13 for the battery of comparison example 5. In other words, no expansion was recognized in case of the battery of embodiment 4.

### (Embodiment 5)

A battery of this embodiment is different from that of the embodiment 4 only in a point that the cathode composite 2 was formed in the following manner.

The mixture A₁ same with that of the embodiment 1 was prepared. The mixture A₁ was mixed to xylene solution (2 weight parts solution) of nitrile-butadiene rubber forming the binder and platinum treated carbon with a weight ratio of 2.2 to 2.0 to 0.06 under the atmosphere of dried inert gas. This mixture was cast on the positive current collector plate 1, on a surface of which a conductive carbon film was formed, by means of screen coating and dried under the atmosphere of dried inert gas so as to be cured. A film thickness of the cathode composite 2 formed on the positive current collector plate 1 was 60 *µ*m. Carbon having a brand name of "Platinum on 4- to 8-mash carbon" made by Aldrich Corp. was used for the platinum treated carbon. This meant carbon of 4 to 8 meshes coated with platinum.

### (Embodiment 6)

A battery of this embodiment is different from that of the embodiment 4 only in a point that the cathode composite 2 was formed in the following manner.

The mixture A₁ same with that of the embodiment 1 was prepared. The mixture A₁ was mixed to xylene solution (2 weight parts solution) of nitrile-butadiene rubber forming the binder and ruthenium treated carbon with a weight ratio of 2.2 to 2.0 to 0.05 under the atmosphere of dried inert gas. This mixture was cured in the same way as that of the embodiment 5. A film thickness of the cathode composite 2 formed on the positive current collector plate 1 was 60 *µ*m. Carbon having a brand name of "Ruthenium on 4- to 8-mash carbon" made by Aldrich Corp. was used for the ruthenium treated carbon. This meant carbon of 4 to 8 meshes coated with ruthenium.

### (Embodiment 7)

A battery of this embodiment is different from that of the embodiment 4 only in a point that the cathode composite 2 was formed in the following manner.

The mixture A₁ same with that of the embodiment 1 was prepared. The mixture A₁ was mixed to xylene solution (2 weight parts solution) of nitrile-butadiene rubber forming the binder and rhodium treated carbon with a weight ratio of 2.2 to 2.0 to 0.05. This mixture was cured in the same way as that of the embodiment 5. A film thickness of the cathode composite 2 formed on the positive current collector plate 1 was 60 *µ*m. Carbon having a brand name of "Rhodium on 4- to 8-mash carbon" made by Aldrich Corp. was used for the rhodium treated carbon. This meant carbon of 4 to 8 meshes coated with rhodium.

### (Test 5)

Respective 40 cells of the batteries of embodiments 5, 6 and 7 were examined to check numbers of expanded cells after 100 days preservation at 60°C i.e. after long-term preservation. The number was zero for the battery of embodiment 5, but it was one for the batteries 6 and 7 respectively. In other words, the expansion could be restrained even when platinum, ruthenium and rhodium were included in place of palladium.

### (Embodiment 8)

This embodiment relates to a film type secondary battery. In the battery of this embodiment, LiCoO₂ is used for the active material of the cathode composite 2. An anode composite is used in place of the anode of the battery shown in Fig. 1, and other components are same with those of the battery shown in Fig. 1. Palladium forming an element belonging to VIII-group in periodic table and the binder exist in the cathode composite 2 and the anode composite 4. An aluminum plate is used for the positive current collector plate 1.

The battery of this embodiment was made up through the following processes (a) to (e).
(a); The cathode composite 2 was formed in the following manner. The mixture A₃ same with that of the embodiment 3 was prepared. The mixture A₃ was mixed to dimethylformamide solution (2 wt% solution) of polyacrylonitrile forming the binder and the palladium treated carbon same with that of the embodiment 1 with a weight ratio of 2.4 to 2.0 to 0.04 under the atmosphere of dried inert gas. This mixture was cast on the positive current collector plate 1, on a surface of which a conductive carbon film was formed, by means of screen coating and dried under the atmosphere of dried inert gas so as to be cured. A film thickness of the cathode composite 2 formed on the positive current collector plate 1 was 60 *µ*m.
(b); The electrolyte layer 3 was formed on the cathode composite 2 in the following manner. The mixture F₃ same with that of the embodiment 3 was prepared. This mixture F₃ was cast by means of screen coating on the cathode composite 2 under the atmosphere of dried inert gas, and irradiated with electron beam having an electron beam intensity of 8 Mrad under the atmosphere of dried inert gas so as to be cured. A film thickness of the electrolyte layer 3 formed on the cathode composite 2 was 25 *µ*m.
(c); The anode composite 4 was formed in the following manner. Carbon powder forming the negative active material, toluene solution (2 weight parts solution) of copolymer of ethylene-propylene-cyclopentadiene and the palladium treated carbon same with that of the embodiment 1 were mixed with a weight ratio of 2.0 to 5.0 to 0.025 under the atmosphere of dried inert gas. This mixture was cast on the negative current collector plate 5 by means of screen coating, and dried under the atmosphere of dried inert gas so as to be cured. A film thickness of the anode composite 4 formed on the negative current collector plate 5 was 30 *µ*m.
(d); The electrolyte layer 3 was formed on the anode composite 4 in the following manner. The mixture F₃ same with that of the embodiment 3 was prepared. This mixture F₃ was cast by means of screen coating on the anode composite 4 under the atmosphere of dried inert gas, and irradiated with electron beam having an electron beam intensity of 8 Mrad under the atmosphere of dried inert gas so as to be cured. A film thickness of the electrolyte layer 3 formed on the anode composite 4 was 25 *µ*m.
(e); A laminate of the electrolyte layer 3, the cathode composite 2 and the positive current collector plate 1 prepared by the process (b) and a laminate of the electrolyte layer 3, the anode composite 4 and the negative current collector plate 5 prepared by the process (d) were made contact each other at the respective electrolyte layers 3.

### (Comparison example 6)

A battery of this comparison example is different from that of the embodiment 8 only in a point that the cathode composite 2 and the anode composite 4 include the binder but they do not include the palladium treated carbon, and that the electrolyte layer 3 is formed by the irradiation of ultraviolet ray.

The battery of this comparison example was made up through the following processes (a) to (e).
(a); The cathode composite 2 was formed in the following manner. The same process (a) of the embodiment 8 was applied except that the palladium treated carbon was omitted. A film thickness of the cathode composite 2 formed on the positive current collector plate 1 was 60 *µ*m.
(b); The electrolyte layer 3 was formed on the cathode composite 2 in the following manner. The mixture B₁ same with that of the embodiment 1 was prepared. 30 weight parts of mixture B₁ was mixed to 6 weight parts of LiBF₄, 32 weight parts of 1,2-dimethoxyethane, 32 weight parts of γ-bytuloractone and 0.03 weight part of benzylmethylketal (mixture I₆). This mixture I₆ was cast by means of screen coating on the cathode composite 2 under the atmosphere of dried inert gas, and irradiated with ultraviolet ray having an intensity of 20 mW/cm² for 60 seconds under the atmosphere of dried inert gas so as to be cured. A film thickness of the electrolyte layer 3 formed on the cathode composite 2 was 25 *µ*m.
(c); The anode composite 4 was formed in the following manner. The same process (c) of the embodiment 8 was applied except that the palladium treated carbon was omitted. A film thickness of the anode composite 4 formed on the negative current collector plate 5 was 30 *µ*m.
(d); The electrolyte layer 3 was formed on the anode composite 4 in the following manner. The mixture I₆ same with that of the process (b) was prepared. This mixture I₆ was cast by means of screen coating on the anode composite 4 under the atmosphere of dried inert gas, and irradiated with ultraviolet ray having an intensity of 20 mW/cm² for 60 seconds under the atmosphere of dried inert gas so as to be cured. A film thickness of the electrolyte layer 3 formed on the anode composite 4 was 25 *µ*m.
(e); A laminate of the electrolyte layer 3, the cathode composite 2 and the positive current collector plate 1 prepared by the process (b) and a laminate of the electrolyte layer 3, the anode 4 and the negative current collector plate 5 prepared by the process (d) were made contact each other at the respective electrolyte layers 3.

### (Test 6)

Charge/discharge cycle tests were done on the batteries of embodiment 8 and comparison examples 3 and 6 using same test conditions with those of the test 3, to examine respective charge/discharge cycle characteristics at initial stage and after long-term preservation.

Fig. 7 shows charge/discharge cycle characteristics at initial stage and Fig. 8 shows charge/discharge cycle characteristics after long-term preservation. In these figures, X8 denotes a charge/discharge cycle characteristic of the battery of embodiment 8, Y3 denotes a charge/discharge cycle characteristic of the battery of comparison example 3 and Y6 denotes a charge/discharge cycle characteristic after long-term preservation of the battery of comparison example 6. Further, an axis of abscissa represents a charge/discharge cycle number (time) and an axis of ordinate represents a battery capacity (mAh).

As obvious from Fig. 7 and Fig. 8, the battery of embodiment 8 is excellent in the charge/discharge cycle characteristics both at initial stage and after long-term preservation as compared with the batteries of comparison examples 3 and 6. The reason can be considered as same with that of the embodiment 1.

Further, respective 40 cells of the batteries of embodiment 8 and comparison examples 3 and 6 were examined to check numbers of expanded cells after long-term preservation. The number was zero for the battery of embodiment 8, but it was nine for the battery of comparison example 3 and 13 for the battery of comparison example 6. In other words, no expansion was recognized in case of the battery of embodiment 8.

### (Embodiment 9)

This embodiment relates to a film type primary battery. A battery structure is same with that of the battery shown in Fig. 1. Palladium forming an element belonging to VIII-group in periodic table exists in the cathode composite 2.

The battery of this embodiment was made up through the following processes (a) to (d).
(a); The cathode composite 2 was formed in the following manner. The mixture A₂ same with that of the embodiment 2 was prepared. While, the mixture C₁ same with that of the embodiment 1 was prepared. The mixture A₂ was mixed to the mixture C₁ with a weight ratio of 10 to 3 under the atmosphere of dried inert gas. This mixture was cast by means of screen coating on the positive current collector plate 1, on a surface of which a conductive carbon film was formed, and irradiated with electron beam having an electron beam intensity of 10 Mrad under the atmosphere of dried inert gas so as to be cured. A film thickness of the cathode composite 2 formed on the positive current collector plate 1 was 60 *µ*m.
(b); The anode 4 was composed of lithium metal forming the negative active material, and formed by being press bonded to the negative current collector plate 5.
(c); The electrolyte layer 3 was formed on the anode 4 in the following manner. The mixture E₁ same with that of the embodiment 1 was prepared. This mixture E₁ was cast by means of screen coating on the anode 4, and irradiated with electron beam having an electron beam intensity of 8 Mrad under the atmosphere of dried inert gas so as to be cured. A thickness of the electrolyte layer 3 formed on the anode 4 was 20 *µ*m.
(d); A laminate of the cathode composite 2 and the positive current collector plate 1 prepared by the process (a) and a laminate of the electrolyte layer 3, the anode 4 and the negative current collector plate 5 prepared by the process (c) were made contact each other at the cathode composite 2 and the electrolyte layer 3.

### (Comparison example 7)

A battery of this comparison example is different from that of the embodiment 9 only in a point that the cathode composite 2 does not include the palladium treated carbon.

### (Embodiment 10)

This embodiment relates to a film type primary battery and a battery structure is same with that of the battery shown in Fig. 1. In the battery of this embodiment, palladium forming an element belonging to VIII-group in periodic table exists in the electrolyte layer 3, and a binder exists in the cathode composite 2.

The battery of this embodiment was made up through the following processes (a) to (e).
(a); The cathode composite 2 was formed in the following manner. The mixture A₁ same with that of the embodiment 1 was prepared. The mixture A₁ was mixed to xylene solution (2 weight parts solution) of nitrile-butadiene rubber with a weight ratio of 2.2 to 2.0 under the atmosphere of dried inert gas. This mixture was cast by means of screen coating on the positive current collector plate 1, on a surface of which a conductive carbon film was formed, and dried under the atmosphere of dried inert gas so as to be cured. A film thickness of the cathode composite 2 formed on the positive current collector plate 1 was 60 *µ*m.
(b); The electrolyte layer 3 was formed on the cathode composite 2 in the following manner. The mixture B₁ same with that of the embodiment 1 was prepared. 30 weight parts of the mixture B₁ were mixed to 6 weight parts of LiClO₄, 64 weight parts of propylene carbonate and 1.4 weight parts of palladium treated carbon same with that of the embodiment 1. This mixture was cast by means of screen coating on the cathode composite 2, and irradiated with electron beam having an electron beam intensity of 8 Mrad under the atmosphere of dried inert gas so as to be cured. A thickness of the electrolyte layer 3 formed on the cathode composite 2 was 15 *µ*m.
(c); The anode 4 was composed of lithium metal forming the negative active material, and formed by being press bonded to the negative current collector plate 5.
(d); The electrolyte layer 3 was formed on the anode 4 in the following manner. The mixture E₁ same with that of the embodiment 1 was prepared. This mixture E₁ was cast by means of screen coating on the anode 4, and irradiated with electron beam having an electron beam intensity of 8 Mrad under the atmosphere of dried inert gas so as to be cured. A thickness of the electrolyte layer 3 formed on the anode 4 was 15 *µ*m.
(e); A laminate of the electrolyte layer 3, the cathode composite 2 and the positive current collector plate 1 prepared by the process (b) and a laminate of the electrolyte layer 3, the anode 4 and the negative current collector plate 5 prepared by the process (d) were made contact each other at the respective electrolyte layers 3.

### (Test 7)

Discharge tests were done on the batteries of embodiments 9 and 10 and comparison example 7 using the same conditions as those of the test 1, to examine respective discharge characteristics at initial stage and after long-term preservation. Fig. 9 shows discharge characteristics at initial stage and after long-term preservation. In the figure, X9(i) and X10(i) denote discharge characteristics at initial stage of the batteries of embodiments 9 and 10, X9(p) and X10(p) denote discharge characteristics after long-term preservation of the batteries of embodiments 9 and 10, Y7(i) denotes a discharge characteristic at initial stage of the battery of comparison example 7 and Y7(p) denotes a discharge characteristic after long-term preservation of the battery of comparison example 7. Further, an axis of abscissa represents a discharge time (hour) and an axis of ordinate represents a discharge voltage (V).

As obvious from Fig. 9, the batteries of embodiments 9 and 10 are excellent in the discharge characteristics both at initial stage and after long-term preservation as compared with the batteries of comparison example 7. The reason can be considered as same with that of the embodiment 1.

Further, respective 25 cells of the batteries of embodiments 9 and 10 and comparison example 7 were examined to check numbers of expanded cells after long-term preservation. The number was zero for the batteries of embodiments 9 and 10, but it was seven for the battery of comparison example 7. In other words, no expansion was recognized in case of the batteries of embodiments 9 and 10.

### (Embodiment 11)

This embodiment relates to a film type secondary battery. In the battery of this embodiment, LiCoO₂ is used for the active material of the cathode composite 2. An anode composite is used in place of the anode for the battery shown in Fig.1, and other components are same with those of the battery shown in Fig. 1. In the battery of this embodiment, palladium forming an element belonging to VIII-group in periodic table exists in the electrolyte layer 3. Further, a binder exists in the cathode composite 2 and the anode composite 4. An aluminum plate is used for the positive current collector plate 1.

The battery of this embodiment was made up through the following processes (a) to (e).
(a); The cathode composite 2 was formed in the following manner. The mixture A₃ same with that of the embodiment 3 was prepared. The mixture A₃ was mixed to dimethylformamide solution (2 wt% solution) of polyacrylonitrile forming the binder with a weight ratio of 2.4 to 2.0 under the atmosphere of dried inert gas. This mixture was cast by means of screen coating on the positive current collector plate 1, on a surface of which a conductive carbon film was formed, and dried under the atmosphere of dried inert gas so as to be cured. A film thickness of the cathode composite 2 formed on the positive current collector plate 1 was 60 *µ*m.
(b); The electrolyte layer 3 was formed on the cathode composite 2 in the following manner. The mixture B₁ same with that of the embodiment 1 was prepared. 30 weight parts of the mixture B₁ were mixed to 6 weight parts of LiBF₄, 32 weight parts of 1,2-dimethoxyethane, 32 weight parts of γ-butyloractone and 1.5 weight parts of palladium treated carbon same with that of the embodiment 1. This mixture was cast by means of screen coating on the cathode composite 2, and irradiated with electron beam having an electron beam intensity of 8 Mrad under the atmosphere of dried inert gas so as to be cured. A thickness of the electrolyte layer 3 formed on the cathode composite 2 was 25 *µ*m.
(c); The anode composite 4 was formed in the following manner. Carbon powder forming the negative active material and toluene solution (2 weight parts solution) of copolymer of ethylene-propylene-cyclopentadiene were mixed with a weight ratio of 2.0 to 5.0 under the atmosphere of dried inert gas. This mixture was cast by means of screen coating on the negative current collector plate 5 and dried under the atmosphere of dried inert gas so as to be cured. A film thickness of the anode composite 4 formed on the negative current collector plate 5 was 30 *µ*m.
(d); The electrolyte layer 3 was formed on the anode composite 4 in the following manner. The mixture F₃ same with that of the embodiment 3 was prepared. This mixture F₃ was cast by means of screen coating on the anode composite 4 under the atmosphere of dried inert gas, and irradiated with electron beam having an electron beam intensity of 8 Mrad under the atmosphere of dried inert gas so as to be cured. A film thickness of the electrolyte layer 3 formed on the anode composite 4 was 25 *µ*m.
(e); A laminate of the electrolyte layer 3, the cathode composite 2 and the positive current collector plate 1 prepared by the process (b) and a laminate of the electrolyte layer 3, the anode composite 4 and the negative current collector plate 5 prepared by the process (d) were made contact each other at the respective electrolyte layers 3.

### (Test 8)

Charge/discharge cycle test was done on the battery of embodiment 11 using the same conditions as those of the test 3, to examine charge/discharge cycle characteristics at initial stage and after long-term preservation. Fig. 10 shows charge/discharge cycle characteristics at initial stage and after long-term preservation. Further, cycle characteristics of the battery of comparison example 3 are also shown in the figure. In these figures, X11(i) denotes a discharge characteristic at initial stage of the battery of embodiment 11, X11(p) denotes a discharge characteristic after long-term preservation of the battery of embodiment 11, Y3(i) denotes a discharge characteristic at initial stage of the battery of comparison example 3, and Y3(p) denotes a discharge characteristic after long-term preservation of the battery of comparison example 3. Further, an axis of abscissa represents a discharge time (hour) and an axis of ordinate represents a discharge voltage (V).

As obvious from Fig. 10, the battery of embodiment 11 is excellent in the discharge characteristics both at initial stage and after long-term preservation as compared with the battery of comparison example 3. The reason can be considered as same with that of the embodiment 1.

Further, 25 cells of the battery of embodiment 11 were examined to check numbers of expanded cells after long-term preservation. The number was zero for the battery of embodiment 11. In other words, no expansion was recognized in case of the battery of embodiment 11.

### (Embodiment 12)

In a battery of this embodiment; the palladium treated carbon same with that of the embodiment 1 was installed on a surface of the anode 4 composed of lithium metal, the palladium treated carbon was omitted in the cathode composite 2, and the other components were same with those of the embodiment 9.

### (Embodiment 13)

In a battery of this embodiment; the palladium treated carbon same with that of the embodiment 1 was installed between the cathode composite 2 and the electrolyte layer 3, the palladium treated carbon was omitted in the cathode composite 2, and the other components were same with those of the embodiment 9.

### (Embodiment 14)

In a battery of this embodiment; the palladium treated carbon same with that of the embodiment 1 was installed on a surface of the sealing material 6 as illustrated by Fig. 11, the palladium treated carbon was omitted in the cathode composite 2, and the other components were same with those of the embodiment 9. In Fig. 11, 7 is the palladium treated carbon and the other components are same with those of Fig. 1.

### (Embodiment 15)

A battery of this embodiment relates to a film type primary battery and is made up in the following manner.

85 weight parts of MnO₂ forming the positive active material, 7 weight parts of acetylene black forming the conductive material, 5 weight parts of polytetrafluoroethylene forming the binder, and 3 weight parts of palladium treated carbon same with that of the embodiment 1 were mixed, so that a composite sheet having a thickness of 0.2 mm comprising the mixture was formed. While, a stainless foil on a periphery of which denatured polypropylene forming the sealing material was installed, was prepared. The foregoing composite sheet was press bonded onto the stainless foil to prepare the cathode.

On the other hand, a lithium foil having a thickness of about 0.1 mm was press bonded to the stainless foil to prepare the anode. An electrolyte comprising propylene carbonate solution dissolved with LiClO₄ of 1 mol. was impregnated under reduced pressure to a separator comprising polypropylene non-woven fabric and the cathode.

The cathode, the separator and the anode were laminated, and the peripheral sealing material was heat sealed to complete the battery.

### (Comparison example 8)

In a battery of this comparison example; the amount of acetylene black in the composite sheet of cathode was 10 weight parts, the palladium treated carbon was omitted, and the other components were same with those of the embodiment 15.

### (Test 9)

Respective 25 cells of the batteries of embodiments 12 through 15 and comparison example 8 were examined to check numbers of expanded cells after 100 days preservation at 60°C i.e. after long-term preservation. The number was zero for the batteries of embodiments 12 through 15, but it was ten for the battery of comparison example 8. In other words, no expansion was recognized in case of the batteries of embodiment 12 through 15.

### (Embodiment 16)

A battery of this embodiment relates to a film type secondary battery and is made up in the following manner.

85 weight parts of LiCoO₂ forming the positive active material, 7 weight parts of acetylene black forming the conductive material, 5 weight parts of polytetrafluoroethylene forming the binder, and 3 weight parts of palladium treated carbon same with that of the embodiment 1 were mixed, so that a composite sheet having a thickness of 0.2 mm comprising the mixture was formed. While, an aluminum foil on a periphery of which denatured polypropylene forming the sealing material was installed, was prepared. The foregoing composite sheet was press bonded onto the aluminum foil to prepare the cathode.

On the other hand, 95 weight parts carbon powder forming the negative active material and 5 weight parts of polytetrafluoroethylene forming the binder were mixed, so that a composite sheet having a thickness of 0.2 mm comprising the mixture was formed. The composite sheet was press bonded onto a nickel foil to form the anode. An electrolyte comprising ethylene carbonate solution dissolved with LiPF₆ of 1 mol. was impregnated under reduced pressure to a separator comprising polypropylene porous film, the cathode and the anode.

The cathode, the separator and the anode were laminated, and the peripheral sealing material was heat sealed to complete the battery.

### (Comparison example 9)

In a battery of this comparison example; the amount of acetylene black in the composite sheet of cathode was 10 weight parts, the palladium treated carbon was omitted, and the other components were same with those of the embodiment 16.

### (Embodiment 17)

In a battery of this embodiment; the composite sheet of anode was formed by mixing 92 weight parts of carbon powder, 25 weight parts of polytetrafluoroethylene and 3 weight parts of palladium treated carbon same with that of the embodiment 1, and the other components were same with those of the comparison example 9.

### (Test 10)

Charge/discharge cycle tests were done on the batteries of embodiments 16 and 17 and comparison example 9, to examine respective charge/discharge cycle characteristics at initial stage and after long-term preservation. An electrode surface area could be changed variously depending on manufacturing process, however, it was set to 100 cm² in these tests.

Conditions of charge/discharge cycle tests were a temperature of 25°C, a constant current per unit area of 0.5 mA/cm², a charge end voltage of 4.1V, and a discharge end voltage of 2.7V.

A period of long-term preservation was 100 days at 60 °C.

Fig. 12 shows charge/discharge cycle characteristics at initial stage and after long-term preservation. In the figure, X16(i) and X17(i) denote charge/discharge cycle characteristics at initial stage of the batteries of embodiments 16 and 17, X16(p) and X17(p) denote charge/discharge cycle characteristics after long-term preservation of the batteries of embodiments 16 and 17 respectively, Y9(i) denotes a charge/discharge cycle characteristic at initial stage of the battery of comparison example 9, and Y9(p) denotes a charge/discharge cycle characteristic after long-term preservation of the battery of comparison example 9. Further, an axis of abscissa represents a charge/discharge cycle number (time) and an axis of ordinate represents a battery capacity (mAh).

As obvious from Fig. 12, capacity decreases at initial stage accompanied by elapse of cycle were small and capacity decreases after long-term preservation were also small in the batteries of embodiments 16 and 17. However, the both capacity decreases were large in the battery of comparison example 9. Further, no expansion was produced in the batteries of embodiments 16 and 17 during the tests. However, the expansion was produced in the battery of comparison example 9 as the cycle advanced and the expansion was positively produced after long-term preservation. It can be considered that, in the battery of comparison example 9, an impedance of battery inside was increased by the expansion to cause the decrease in capacity.

In the foregoing embodiments, the palladium treated carbon etc. included in the electrode composites may be used by being previously smeared to the active material.

### Industrial Applicability

The battery of this invention, which is provided with a high long-term reliability and controlled its expansion and bursting, has a large industrial value in use.

## Claims

1. A battery having a sealed interior surrounded by a current collector (5,6) and sealing material (6), said battery interior containing:
a cathode composite (2)comprising an electrochemically positive active material and an electroconductive material;
an anode composite (4) comprising electrochemically negative active material and an electro conductive material, or an anode consisting of electrochemically negative active material, and
an electrolyte,
wherein at least one of the anode or anode composite, cathode and electrolyte includes an ion-conductive high-molecular compound containing dissolved ionic compound;
and wherein said battery interior contains one or more kinds of material by which gas produced in the battery is added to residual reactive double bonds in the ion-conductive high-molecular compound.

2. A battery according to claim 1 in which said material for adding gas exists in, or on a surface of, the cathode composite (2).

3. A battery according to claim 1 in which said material for adding gas exists in, or on a surface of, the anode composite (4).

4. A battery according to claim 1 in which said material for adding gas exists on a surface of the anode.

5. A battery according to claim 1 in which said material for adding gas exists on the inner surface of the sealing material (6).

6. A battery according to claim 1 in which said material for adding gas exists in the electrolyte.

7. A battery according to any one of the preceding claims in which said material for adding gas is an element belonging to Group VIII of the periodic table.

8. A battery according to claim 7 in which said element is palladium, ruthenium, rhodium or platinum.

9. A battery according to any one of claims 1 to 6 in which said material for adding gas is palladium-treated carbon, palladium-treated MnO₂, platinum black or platinum-treated carbon.

10. A battery according to any one of the preceding claims in which at least one of the cathode composite (2) and the anode composite (4) includes a binder.

11. A battery according to any one of the preceding claims in which the ion-conductive high-molecular compound is one formed by polymerization reaction caused by irradiation with ionizing radiation or ultraviolet rays.

12. A battery according to any one of the preceding claims in which the ion-conductive high-molecular compound is one formed by polymerizing a high-molecular compound having reactive double bonds and polyether bonds so as to create a crosslinked network structure.

13. A battery according to claim 12 in which the ion-conductive high-molecular compound is an ether bond-crosslinked polymerisation product of di(meth)acrylate of polyethylene glycol and mono(meth)acrylate of polyethylene glycol.

14. A battery according to any one of the preceding claims in which the ion-conductive high-molecular compound incorporates an organic compound to dissolve the ionic compound.

15. A battery according to any one of the preceding claims in which the anode composite (4) includes a carbon material as said active material.

## Patentansprüche

1. Batterie, die einen verschlossenen Innenraum aufweist, der von einem Stromkollektor (5,6) und einem Abdichtungsmaterial (6) umgeben ist, wobei der Batterieinnenraum enthält:
ein Kathoden-Komposit (2), umfassend ein elektrochemisch positives, aktives Material und ein elektrisch leitendes Material;
ein Anoden-Komposit (4), umfassend ein elektrochemisch negatives, aktives Material und ein elektrisch leitendes Material, oder eine Anode, die aus einem elektrochemisch negativen, aktiven Material besteht, und einen Elektrolyten,
worin wenigstens ein aus Anode oder Anoden-Komposit, Kathode und Elektrolyt ausgewähltes Material eine ionenleitende, hochmolekulare Verbindung einschließt, welche eine gelöste, ionische Verbindung enthält;
und worin der Batterieinnenraum eine oder mehrere Materialarten enthält, durch die ein in der Batterie produziertes Gas an restliche, reaktive Doppelbindungen in der ionenleitenden, hochmolekularen Verbindung addiert wird.

2. Batterie gemäß Anspruch 1, in der das Material zur Addition von Gas in oder auf einer Fläche des Kathoden-Komposits (2) existiert.

3. Batterie gemäß Anspruch 1, in der das Material zur Addition von Gas in oder auf einer Fläche des Anoden-Komposits (4) existiert.

4. Batterie gemäß Anspruch 1, in der das Material zur Addition von Gas auf einer Fläche der Anode existiert.

5. Batterie gemäß Anspruch 1, in der das Material zur Addition von Gas auf der Innenfläche des Abdichtungsmaterials (6) existiert.

6. Batterie gemäß Anspruch 1, in der das Material zur Addition von Gas in dem Elektrolyten existiert.

7. Batterie gemäß irgendeinem der vorhergehenden Ansprüche, in der das Material zur Addition von Gas ein Element ist, das zur Gruppe VIII des Periodensystems der Elemente gehört.

8. Batterie gemäß Anspruch 7, in der das Element Palladium, Ruthenium, Rhodium oder Platin ist.

9. Batterie gemäß irgendeinem der Ansprüche 1 bis 6, in der das Material zur Addition von Gas Palladium-behandelter Kohlenstoff, Palladium-behandeltes MnO₂, Platinruß oder Platin-behandelter Kohlenstoff ist.

10. Batterie gemäß irgendeinem der vorhergehenden Ansprüche, in der wenigstens ein aus Kathoden-Komposit (2) und Anoden-Komposit (4) ausgewähltes Material ein Bindemittel einschließt.

11. Batterie gemäß irgendeinem der vorhergehenden Ansprüche, in der die ionenleitende, hochmolekulare Verbindung eine solche ist, die durch eine Polymerisationsreaktion gebildet wird, welche durch Bestrahlung mit ionisierender Strahlung oder Ultraviolettstrahlung verursacht wird.

12. Batterie gemäß irgendeinem der vorhergehenden Ansprüche, in der die ionenleitende, hochmolekulare Verbindung eine solche ist, die durch Polymerisation einer hochmolekularen Verbindung mit reaktiven Doppelbindungen und Polyether-Bindungen gebildet wird, um somit eine vernetzte Netzwerkstruktur zu bilden.

13. Batterie gemäß Anspruch 12, in der die ionenleitende, hochmolekulare Verbindung ein Ether-gebundenes, vernetztes Polymerisations-produkt eines Di(meth)acrylats von Polyethylenglycol und eines Mono(meth)acrylats von Polyethylenglycol ist.

14. Batterie gemäß irgendeinem der vorhergehenden Ansprüche, in der in die ionenleitende, hochmolekulare Verbindung eine organische Verbindung eingefügt ist, um die ionische Verbindung zu lösen.

15. Batterie gemäß irgendeinem der vorhergehenden Ansprüche, in der das Anoden-Komposit (4) ein Kohlenstoffmaterial als aktives Material einschließt.

## Revendications

1. Pile comportant un intérieur scellé entouré par un collecteur de courant (5, 6) et un matériau d'étanchéité (6), ledit intérieur de pile contenant:
un composite de cathode (2) comprenant un matériau actif électropositif et un matériau électroconducteur;
un composite d'anode (4) comprenant un matériau actif électronégatif et un matériau électroconducteur, ou une anode constituée par un matériau actif électronégatif; et
un électrolyte,
dans laquelle l'un au moins de l'anode ou composite d'anode, de la cathode et de l'électrolyte inclut un composé à poids moléculaire élevé et conducteur ionique qui contient un composé ionique dissout;
et dans laquelle ledit intérieur de pile contient un ou plusieurs types de matériaux par lesquels un gaz produit dans la pile est additionné à des liaisons doubles réactives résiduelles dans le composé à poids moléculaire élevé et conducteur ionique.

2. Pile selon la revendication 1, dans laquelle ledit matériau pour l'addition du gaz existe dans le composite de cathode (2) ou sur sa surface.

3. Pile selon la revendication 1, dans laquelle ledit matériau pour l'addition du gaz existe dans le composite d'anode (4) ou sur sa surface.

4. Pile selon la revendication 1, dans laquelle ledit matériau pour l'addition du gaz existe sur une surface de l'anode.

5. Pile selon la revendication 1, dans laquelle ledit matériau pour l'addition du gaz existe sur la surface interne du matériau d'étanchéité (6).

6. Pile selon la revendication 1, dans laquelle ledit matériau pour l'addition du gaz existe dans l'électrolyte.

7. Pile selon l'une quelconque des revendications précédentes, dans laquelle ledit matériau pour l'addition du gaz est un élément appartenant au groupe VIII du tableau périodique.

8. Pile selon la revendication 7, dans laquelle ledit élément est le palladium, le ruthénium, le rhodium ou le platine.

9. Pile selon l'une quelconque des revendications 1 à 6, dans laquelle ledit matériau pour l'addition du gaz est du carbone traité au palladium, du MnO₂ traité au palladium, du noir de platine ou du carbone traité au platine.

10. Pile selon l'une quelconque des revendications précédentes, dans laquelle l'un au moins du composite de cathode (2) et du composite d'anode (4) inclut un liant.

11. Pile selon l'une quelconque des revendications précédentes, dans laquelle le composé à poids moléculaire élevé et conducteur ionique est un composé formé par une réaction de polymérisation provoquée par irradiation par un rayonnement ionisant ou un rayonnement ultraviolet.

12. Pile selon l'une quelconque des revendications précédentes, dans laquelle le composé à poids moléculaire élevé et conducteur ionique est un composé formé par polymérisation d'un composé à poids moléculaire élevé comportant des liaisons doubles réactives et des liaisons polyéther afin de créer une structure à réseau de liaisons transversales.

13. Pile selon la revendication 12, dans laquelle le composé à poids moléculaire élevé et conducteur ionique est un produit de polymérisation à liaisons éther transversales de di(méth)acrylate de polyéthylène glycol et de mono(méth)acrylate de polyéthylène glycol.

14. Pile selon l'une quelconque des revendications précédentes, dans laquelle le composé à poids moléculaire élevé et conducteur ionique incorpore un composé organique pour dissoudre le composé ionique.

15. Pile selon l'une quelconque des revendications précédentes, dans laquelle le composite d'anode (4) inclut un matériau carboné en tant que ledit matériau actif.
